# EUROPÄISCHE PATENTANMELDUNG

(11) **EP 3 428 430 A1**
(43) Veröffentlichungstag der Anmeldung: **16.01.2019**
(21) Anmeldenummer: 18181871.7
(22) Anmeldetag: 05.07.2018
(51) Int. Cl.: F02D 41/00, F02D 41/22, F02D 41/24, F02D 41/20, F02M 65/00, F02M 43/00, F02M 57/00, F02D 35/02

(54) **VERFAHREN UND STEUERUNGSEINRICHTUNG ZUM BETREIBEN EINER BRENNKRAFTMASCHINE**

(30) Priorität: 13.07.2017 DE 102017115757
(71) Anmelder: MAN Diesel & Turbo SE, 86153 Augsburg (DE)
(72) Erfinder: Döring, Andreas, 82008 Unterhaching (DE); Weber, Armin, 87754 Kammlach (DE)

(57) **Zusammenfassung**

Verfahren zum Betreiben einer Brennkraftmaschine mit mehreren Zylindern, wobei die Brennkraftmaschine für jeden Zylinder jeweils mindestens einen Kraftstoffinjektor aufweist, und wobei jeder Kraftstoffinjektor über ein Magnetventil des jeweiligen Kraftstoffinjektors zum Öffnen und Schließen angesteuert wird, wobei von den Kraftstoffinjektoren emittierte Körperschallwellen und/oder von den Kraftstoffinjektoren verursachte Beschleunigungen messtechnisch erfasst werden, wobei die messtechnisch erfassten Körperschallwellen und/oder die messtechnisch erfassten Beschleunigungen ausgewertet werden, und wobei auf Grundlage der Auswertung automatisch auf Eigenschaften der Kraftstoffinjektoren geschlossen wird.

## Beschreibung

Die Erfindung betrifft ein Verfahren zum Betreiben einer Brennkraftmaschine und eine Steuerungseinrichtung zur Durchführung des Verfahrens.

Eine Brennkraftmaschine verfügt über mehrere Zylinder. Im Bereich jedes Zylinders ist mindestens ein Kraftstoffinjektor verbaut. Die Kraftstoffinjektoren sind zum Öffnen und Schließen ansteuerbar, nämlich über Magnetventile der Kraftstoffinjektoren, die mit einem entsprechenden Ansteuerstrom beaufschlagt werden. Bei den Kraftstoffinjektoren kann es sich um Kraftstoffinjektoren für Dieselkraftstoffe wie Schweröl oder Rückstandsöl oder auch um Kraftstoffinjektoren für Gaskraftstoffe handeln. Kraftstoffinjektoren werden auch als Kraftstoffeinspritzventile bezeichnet.

Ein Dual-Fuel Motor verfügt je Zylinder typischerweise über drei Kraftstoffinjektoren, nämlich über einen Haupt-Kraftstoffinjektor für Dieselkraftstoffe, über den in einem ersten Betriebsmodus, der auch als Diesel-Betriebsmodus bezeichnet wird, zündwilliger Dieselkraftstoff in die Zylinder eingebracht wird, sowie über einen Gas-Kraftstoffinjektor und einen Zündfluid-Kraftstoffinjektor, wobei in einem zweiten Betriebsmodus, der auch als Gas-Betriebsmodus bezeichnet wird, über den Gas-Kraftstoffinjektor typischerweise ein an sich zündunwilliges Gemisch aus Ladeluft und Gaskraftstoff bereitgestellt wird, welches über Zündfluid, das im zweiten Betriebsmodus über den Zündfluid-Kraftstoffinjektor in die jeweiligen Zylinder eingebracht wird, gezündet werden kann. Als Zündfluid dient dabei der Dieselkraftstoff. Da im zweiten Betriebsmodus relativ kleine Mengen von Dieselkraftstoff in den jeweiligen Zylinder einzubringen sind und Haupt-Kraftstoffinjektoren auf die Bereitstellung solch kleiner Kraftstoffmengen bislang nicht ausgelegt sind, ist es nach dem Stand der Technik erforderlich, separate Zündfluid-Kraftstoffinjektoren mit verringerten Einspritzmengen an einem Dual-Fuel Motor zu verbauen.

Die Kraftstoffinjektoren unterliegen im Betrieb der Brennkraftmaschine einem Verschleiß. Daher müssen Brennkraftmaschinen, nämlich die Kraftstoffinjektoren derselben, in definierten Serviceintervallen gewartet oder gar ausgetauscht werden. Insbesondere bei Großbrennkraftmaschinen, wie zum Beispiel Schiffsdieselbrennkraftmaschinen, die als Dieselkraftstoff mit Schweröl, Rückstandsöl oder dergleichen betrieben werden, bereitet die Abschätzung solcher Serviceintervalle auf Grund der Vielzahl und Variantenvielfalt der Kraftstoffqualitäten und damit der durch diese verursachten Verschleißraten Schwierigkeiten. Ferner unterliegen derartige Kraftstoffinjektoren einem erhöhten Verschleiß, insbesondere durch hohe Schwefel- und Ascheanteile im Dieselkraftstoff, die zu einem erhöhten Verschleiß führen, oder auch durch erhöhte Metallgehalte im Dieselkraftstoff, die zur Ausbildung von Schlacke führen können und ein Schließen der Kraftstoffinjektoren verhindern. Ähnliche Probleme treten auch bei den Gas-Kraftstoffinjektoren, insbesondere beim Betrieb mit Biogas, auf.

Aus der Praxis ist es bekannt, auf Grundlage einer messtechnisch erfassten Abgastemperatur das Verhalten der Kraftstoffinjektoren zu überprüfen. Dies ist jedoch ungenau und mit langen Verzögerungszeiten verbunden, da sich ein Fehler oder ein Verschleiß an Kraftstoffinjektoren erst mit großer Verzögerung abhängig von der Abgastemperatur feststellen lässt. Es besteht daher Bedarf an einem Verfahren zum Betreiben einer Brennkraftmaschine, mit Hilfe dessen Eigenschaften der Kraftstoffinjektoren einfach und zuverlässig und schnell überwacht werden können, um insbesondere abhängig hiervon erforderliche Servicearbeiten bzw. Wartungsarbeiten zu erkennen und auszulösen. Insbesondere besteht auch bedarf daran, bei Dual-Fuel Motoren die Haupt-Kraftstoffinjektoren genauer zu betrieben, sodass auf separate Zündfluid-Kraftstoffinjektoren verzichtet werden kann.

Hiervon ausgehend liegt der vorliegenden Erfindung die Aufgabe zugrunde, ein neuartiges Verfahren zum Betreiben einer Brennkraftmaschine und eine Steuerungseinrichtung zur Durchführung des Verfahrens zu schaffen.

Diese Aufgabe wird durch ein Verfahren nach Anspruch 1 gelöst. Erfindungsgemäß werden von den Kraftstoffinjektoren emittierte Körperschallwellen und/oder von den Kraftstoffinjektoren verursachte Beschleunigungen messtechnisch erfasst, wobei die messtechnisch erfassten Körperschallwellen und/oder Beschleunigungen der Kraftstoffinjektoren ausgewertet werden, wobei auf Grundlage der Auswertung automatisch auf Eigenschaften der Kraftstoffinjektoren geschlossen wird. Vorzugsweise werden zur Auswertung die messtechnisch erfassten Körperschallwellen und/oder Beschleunigungen mit einem jeweiligen Referenzwert und/oder untereinander verglichen. Insbesondere ein Fehler oder ein Verschleiß an Kraftstoffinjektoren kann schnell ohne Verzögerung erkannt werden.

Vorzugsweise wird auf Grundlage des Vergleichs automatisch auf ordnungsgemäß arbeitende Kraftstoffinjektoren und nicht-ordnungsgemäß arbeitende Kraftstoffinjektoren erkannt. Dann, wenn die an unterschiedlichen bzw. für unterschiedliche Kraftstoffinjektoren erfassten Körperschallwellen und/oder Beschleunigungen mit den Körperschallwellen und/oder Beschleunigungen anderer Kraftstoffinjektoren wechselseitig verglichen werden, kann besonders vorteilhaft auf ordnungsgemäß arbeitende und nicht ordnungsgemäß arbeitende Kraftstoffinjektoren erkannt werden.

Vorzugsweise wird auf Grundlage des Vergleichs automatisch auf eine Öffnungsdauer und/oder Öffnungsgeschwindigkeit und/oder Schließgeschwindigkeit und/oder einen Öffnungszeitpunkt und/oder einen Schließzeitpunkt und/oder einen Öffnungsgrad und/oder Schließgrad und/oder auf einen Verschleiß und/oder auf einen Drift der Kraftstoffinjektoren erkannt. All diese Betriebsparameter der Kraftstoffinjektoren können durch die Erfassung und Auswertung von durch die Kraftstoffinjektoren emittierten Körperschallwellen und/oder von durch die Kraftstoffinjektoren verursachten Beschleunigungen erfasst werden. All diese Kenngrößen stellen Eigenschaften der Kraftstoffinjektoren dar, auf Grundlage derer automatisiert Servicearbeiten und Wartungsarbeiten ausgelöst werden können.

Vorzugsweise werden die Körperschallwellen und/oder Beschleunigungen mit Hilfe von Körperschallsensoren und/oder mit Hilfe von Beschleunigungssensoren erfasst, die vorzugsweise unmittelbar auf den Kraftstoffinjektoren angebracht sind. Durch das unmittelbare Anbringen der jeweiligen Sensoren auf den Kraftstoffinjektoren können die Körperschallwellen und/oder Beschleunigungen besonders genau ermittelt werden.

Nach einer vorteilhaften Weiterbildung der Erfindung wird dann, während des Stillstands der Brennkraftmaschine, im sogenannten Standby-Modus, die Magnetventile der Kraftstoffinjektoren ohne Kraftstoffeinspritzdruck an den Kraftstoffinjektoren zum Öffnen und Schließen angesteuert und , von den Kraftstoffinjektoren emittierte Körperschallwellen und/oder von den Kraftstoffinjektoren verursachte Beschleunigungen messtechnisch erfasst und abhängig von einem Vergleich der Ist-Messgrößen mit Sollgrößen ein magnetventilabhängiger Drift oder Verschleiß der Kraftstoffinjektoren erkannt. Dies ist vorteilhaft, da dadurch Störeinflüsse, wir während des Betriebs der Brennkraftmaschine auftreten, vermieden werden. Während dieses Standby-Modus ist vorgesehen, den Kraftstoffdruck zu minimieren, im besten Fall auf Null abzusenken, um ein Einspritzen von Kraftstoff während der Aktivierung der Injektoren/Einspritzventile zu vermeiden. Vorzugweise wird abhängig von dem magnetventilabhängigen Drift oder Verschleiß ein Ansteuerbeginn und/oder ein Ansteuerende des jeweiligen Magnetventils des jeweiligen Kraftstoffinjektors angepasst. Nach einer weiteren vorteilhaften Weiterbildung der Erfindung wird dann, wenn die Brennkraftmaschine im Einspritz-Modus betreiben und hierbei die Magnetventile der Kraftstoffinjektoren mit Kraftstoffeinspritzdruck an den Kraftstoffinjektoren zum Öffnen und Schließen angesteuert werden, von den Kraftstoffinjektoren emittierte Körperschallwellen und/oder von den Kraftstoffinjektoren verursachte Beschleunigungen messtechnisch erfasst und abhängig von einem Vergleich der Ist-Messgrößen mit Sollgrößen ein düsennadelabhängiger und/oder düsensitzabhängiger Drift oder Verschleiß der Kraftstoffinjektoren erkannt. Vorzugsweise wird abhängig von dem düsennadelabhängigen und/oder düsensitzabhängigen Drift oder Verschleiß der Ansteuerbeginn und/oder das Ansteuerende des jeweiligen Magnetventils des jeweiligen Kraftstoffinjektors angepasst. Mit diesen Weiterbildungen können Kraftstoffinjektoren genauer betrieben werden. Bei Dual-Fuel Motoren können die Haupt-Kraftstoffinjektoren als Zündfluid-Kraftstoffinjektoren genutzt werden, sodass auf separate Zündfluid-Kraftstoffinjektoren verzichtet werden kann.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein schematisiertes Blockschaltbild eines Dual-Fuel-Motors;
- Fig. 2: ein Zeitdiagramm zur Verdeutlichung des Stand des Technik;
- Fig. 3: ein erstes Zeitdiagramm zur Verdeutlichung eines bevorzugten Ausführungsbeispiels der Erfindung;
- Fig. 4: ein zweites Zeitdiagramm zur Verdeutlichung des bevorzugten Ausführungsbeispiels der Erfindung;
- Fig. 5: ein drittes Zeitdiagramm zur Verdeutlichung des bevorzugten Ausführungsbeispiels der Erfindung;
- Fig. 6: ein viertes Zeitdiagramm zur Verdeutlichung des bevorzugten Ausführungsbeispiels der Erfindung.

Die Erfindung betrifft ein Verfahren zum Betreiben einer Brennkraftmaschine sowie eine Steuerungseinrichtung zur Durchführung des Verfahrens. Im Sinne der hier vorliegenden Erfindung wird vorgeschlagen, dass von Kraftstoffinjektoren emittierte Körperschallwellen und/oder von den Kraftstoffinjektoren verursachte Beschleunigungen messtechnisch erfasst und ausgewertet werden. Die messtechnisch erfassten Körperschallwellen und/oder Beschleunigungen werden zur Auswertung vorzugsweise mit einem Referenzwert und/oder untereinander verglichen, wobei auf Grundlage dieses Vergleichs automatisch auf Eigenschaften der Kraftstoffinjektoren geschlossen wird. Auf Grundlage der automatisch erfassten Eigenschaften kann zum Beispiel auf einen Verschleißzustand der Kraftstoffinjektoren geschlossen werden, um abhängig hiervon insbesondere automatisch Servicearbeiten bzw. Wartungsarbeiten an der Brennkraftmaschine steuerungsseitig auszulösen. Abhängig vom Verschleißzustand kann auch ein Notstopp ausgelöst werden.

Dann, wenn von den Kraftstoffinjektoren emittierte Körperschallwellen erfasst werden, erfolgt dies mit Hilfe von Körperschallsensoren, die vorzugsweise unmittelbar auf den Kraftstoffinjektoren angebracht sind. Die Körperschallsensoren können auch auf körperschallseitig mit den Kraftstoffinjektoren gekoppelten Baugruppen angebracht sein. Dann, wenn von den Kraftstoffinjektoren verursachte Beschleunigungen erfasst werden, kommen hierzu Beschleunigungssensoren zum Einsatz, die vorzugsweise unmittelbar auf den Kraftstoffinjektoren angebracht sind. Die Beschleunigungssensoren können auch auf körperschallseitig mit den Kraftstoffinjektoren gekoppelten Baugruppen angebracht sein.

Wie bereits ausgeführt, werden die messtechnisch erfassten und von den Kraftstoffinjektoren emittierten Körperschallwellen und/oder die messtechnisch erfassten und von den Kraftstoffinjektoren verursachten Beschleunigungen ausgewertet, um automatisch auf Eigenschaften der Kraftstoffinjektoren zu schließen.

Dabei ist es möglich, die Körperschallwellen und die Beschleunigungen mit steuerungsseitig vorgegebenen Referenzwerten zu vergleichen.

Alternativ ist es auch möglich, die für einen Kraftstoffinjektor messtechnisch erfassten Körperschallwellen und/oder Beschleunigungen mit den an anderen Kraftstoffinjektoren erfassten Körperschallwellen und/oder Beschleunigungen zu vergleichen, um so über einen Vergleich der Messwerte verschiedener Kraftstoffinjektoren auf unterschiedliche Zustände an den jeweiligen Kraftstoffinjektoren ohne steuerungsseitig fest vorgegebene Referenzwerte zu schließen.

Auf Grundlage der Auswertung der messtechnisch erfassten Größen, kann automatisch auf ordnungsgemäß arbeitende Kraftstoffinjektoren und nicht-ordnungsgemäß arbeitende Kraftstoffinjektoren erkannt werden.

Insbesondere kann durch die Erfassung und Auswertung von emittierten Körperschallwellen und/oder verursachten Beschleunigungen auf eine Öffnungsdauer und/oder Öffnungsgeschwindigkeit und/oder Schließgeschwindigkeit und/oder einen Öffnungszeitpunkt und/oder einen Schließzeitpunkt und/oder einen Öffnungsgrad und/oder einen Schließgrad und/oder auf einen Verschleiß und/oder auf einen Drift an den jeweiligen Kraftstoffinjektoren geschlossen werden. All diese Eigenschaften können genutzt werden, um steuerungsseitig automatisch Service- und Wartungsarbeiten an der Brennkraftmaschine auszulösen.

Zur Erfassung der von den Kraftstoffinjektoren verursachten Beschleunigungen oder der emittierten Körperschallwellen können Sensoren zum Einsatz kommen, die ausschließlich in einer einzigen Messrichtung Messwerte aufnehmen, oder alternativ auch in mehreren Messrichtungen Messsignale aufnehmende Sensoren. Sensoren, die in mehreren Richtungen entsprechende Messwerte aufnehmen, werden auch als Mehrachsaufnehmer bezeichnet. Dann, wenn Sensoren zum Einsatz kommen, die ausschließlich in einer einzigen Richtung messen, können mehrere derartige Sensoren in Kombination miteinander zum Einsatz kommen und in unterschiedlichen Raumrichtungen angeordnet werden. Durch die unterschiedlichen Lauflängen und/oder Einfallswinkel der in unterschiedlichen Raumrichtungen auftretenden Signale ergeben sich weitere Möglichkeiten der Signalauswertung.

Weitere Details der Erfindung werden nachfolgend unter Bezugnahme auf die Figuren für den bevorzugten Einsatzbereich an Dual-Fuel-Motoren beschrieben.

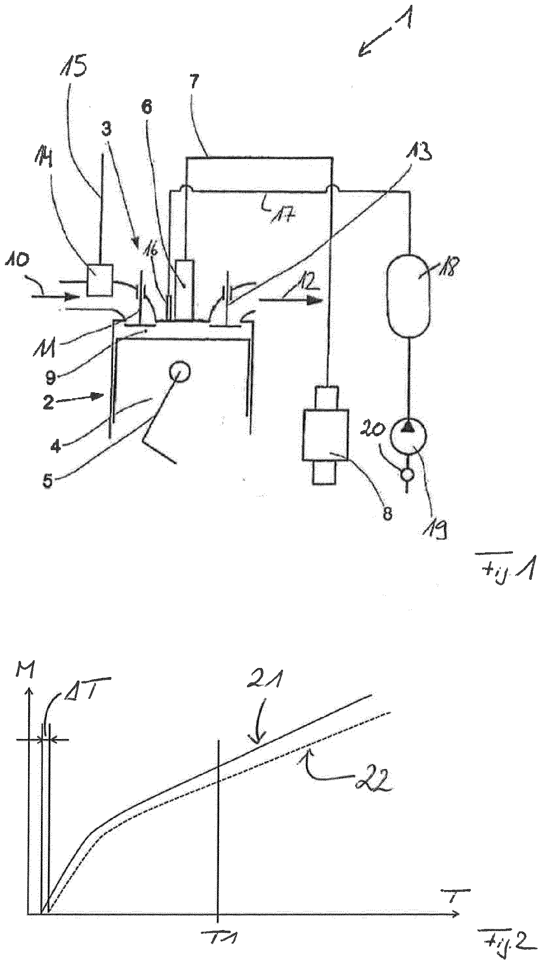

In Fig. 1 sind Baugruppen eines aus dem Stand der Technik bekannten Dual-Fuel-Motors 1 gezeigt, wobei Fig. 1 einen Zylinder 2 eines solchen Dual-Fuel-Motors 1 zeigt. Der Zylinder 2 verfügt über einen Zylinderkopf 3. Im Zylinder 2 bewegt sich ein Kolben 4, der von einem Pleuel 5 geführt ist, auf und ab.

Im Zylinderkopf 3 ist ein Haupt-Kraftstoffinjektor 6 befestigt, durch den zündwilliger Kraftstoff, insbesondere Dieselkraftstoff, über eine Kraftstoffleitung 7 von einer Kraftstoffpumpe 8 aus in einen Brennraum 9 des Zylinders 2 eingespritzt werden kann. Der Haupt-Kraftstoffinjektor 6, die Kraftstoffleitung 7 sowie die Kraftstoffpumpe 8 sind Elemente eines Kraftstoffzuführsystems, das in einem ersten Betriebsmodus, in einem sogenannten Diesel-Betriebsmodus, der Zuführung von zündwilligem Dieselkraftstoff in den Brennraum 9 des Zylinders 2 dient. Beim Dieselkraftstof kann es sich z.B. um Schwer oder Rückstandsöl handeln. Dieses Kraftstoffzuführsystem ist dann aktiv, wenn im ersten Betriebsmodus im Zylinder 2 Dieselkraftstoff verbrannt wird. Zur Verbrennung des Dieselkraftstoff ist in den jeweiligen Zylinder 2 des Dual-Fuel-Motors 1 weiter Ladeluft 10 über Einlassventile 11 einbringbar, wobei bei der Verbrennung des Kraftstoffs entstehendes Abgas 12 über Auslassventile 13 vom jeweiligen Zylinder 2 des Dual-Fuel-Motors 1 abgeführt werden kann.

Im Brennraum 9 des Zylinders 2 des Dual-Fuel-Motors 1 kann in einem zweiten Betriebsmodus, in einem sogenannten Gas-Betriebsmodus, alternativ ein Gaskraftstoff verbrannt werden. Hierzu umfasst der Dual-Fuel-Motor 1 einen Gas-Kraftstoffinjektor 14, über den Gaskraftstoff, der über eine Gasversorgungsleitung 15 bereitgestellt wird, in die Verbrennungsluft 10 eingebracht wird, wobei das Gas-Luft-Gemisch in den Brennraum 9 des Zylinders 2 über Einlassventile 11 eingebracht wird. Der Gasinjektor kann auch so ausgeführt sein, dass Gaskraftstoff direkt in den Brennraum zugegeben wird (hier nicht dargestellt). Man spricht in einem solchen Fall von einer Gasdirekteinspritzung. Auch für diese Art der Gaszugabe kann das erfindungsgemäße Verfahren angewendet werden. Zur Zündung des an sich zündunwilligen Gas-Luft-Gemischs im zweiten Betriebsmodus des Dual-Fuel-Motors 1 dient ein zündwilliges Zündfluid, welches in den Brennraum 9 des Zylinders 2 mit Hilfe eines Zündfluid-Injektors 16 eingebracht werden kann. Als Zündfluid dient dabei der Dieselkraftstoff. Der Zündfluid-Injektor 16 ist Bestandteil eines separaten Zündfluid-Einspritzsystems, wobei das Zündfluid-Einspritzsystem für jeden Zylinder 2 des Dual-Fuel-Motors 1 einen Zündfluid-Injektor 16 umfasst. Der Zündfluid-Injektor 16 ist vorzugsweise über eine Zündfluid-Leitung 17 ausgehend von einem Zündfluid-Speicher 18 mit Zündfluid versorgbar, wobei dem Zündfluid-Speicher 18 eine Zündfluid-Förderpumpe 19 zugeordnet ist, die den Zündfluid-Speicher 18 mit Zündfluid versorgt. Der Zündfluid-Förderpumpe 19 kann eine Saugdrossel 20 zugeordnet sein.

Bei einem aus dem Stand der Technik bekannten Dual-Fuel-Motor sind demnach je Zylinder 2 drei Kraftstoffinjektoren vorhanden, nämlich der Haupt-Kraftstoffinjektor 6 für den ersten Betriebsmodus und der Gas-Kraftstoffinjektor 14 sowie der Zündfluid-Kraftstoffinjektor 16 für den zweiten Betriebsmodus. Der Umstand, dass bei aus der Praxis bekannten Dual-Fuel-Motoren die Haupt-Kraftstoffinjektoren 6, die im ersten Betriebsmodus den Dieselkraftstoff in den Zylinder 2 einbringen, im zweiten Betriebsmodus nicht auch als Zündfluid-Kraftstoffinjektoren genutzt werden können, liegt daran, dass bei aus der Praxis bekannten Dual-Fuel-Motoren die Haupt-Kraftstoffinjektoren 6 nicht mit hinreichender Genauigkeit bei den hierfür notwendigen Kraftstoff-Geringstmengen betrieben werden können.

So zeigt Fig. 2 ein Diagramm, in welchem über einer Ansteuerzeit T eines Haupt-Kraftstoffinjektors 6 eine Einspritzmasse M aufgetragen ist. Ein Kurvenverlauf 21 zeigt dabei eine Soll-Einspritzmasse in Abhängigkeit von der Ansteuerzeit eines Haupt-Kraftstoffinjektors 6, der Kurvenverlauf 22 zeigt eine Ist-Einspritzmasse, die sich infolge eines Drifts und/oder Verschleißes am Haupt-Kraftstoffinjektors 6 abhängig von der Ansteuerzeit T ausbildet. Unter der Ansteuerzeit T eines Kraftstoffinjektors ist diejenige Zeitdauer zu verstehen, mit welcher ein Magnetventil des Kraftstoffinjektors 6 bestromt wird, um zu Beginn der Bestromung den jeweiligen Kraftstoffinjektor zu öffnen und am Ende der Bestromung den jeweiligen Kraftstoffinjektor zu schließen.

Fig. 2 zeigt, dass der Verlauf der Ist-Einspritzmasse 20 vom Verlauf der Soll-Einspritzmasse 21 deutlich abweicht, und zwar in Fig. 2 exemplarisch derart, dass bei sehr kleinen Ansteuerzeiten T der Haupt-Kraftstoffinjektor 6 trotz Ansteuerung zunächst einen Kraftstoff in den Zylinder 2 einbringt und dass mit zunehmend größeren Ansteuerzeiten T der Haupt-Kraftstoffinjektor 6 immer eine geringere Ist-Einspritzmasse in den Zylinder einbringt, als durch die Soll-Einspritzmasse 21 vorgegeben. Die Abweichung ΔT verdeutlicht dabei den Drift oder Verschleiß am Kraftstoffeinspritzventil, der dazu führt, dass zunächst trotz Ansteuerung des Kraftstoffventils dasselbe keinen Kraftstoff in den Zylinder einbringt.
Wie bereits erwähnt, werden erfindungsgemäß von Kraftstoffinjektoren emittierte Körperschallwellen und/oder von Kraftstoffinjektoren verursachte Beschleunigungen messtechnisch erfasst.

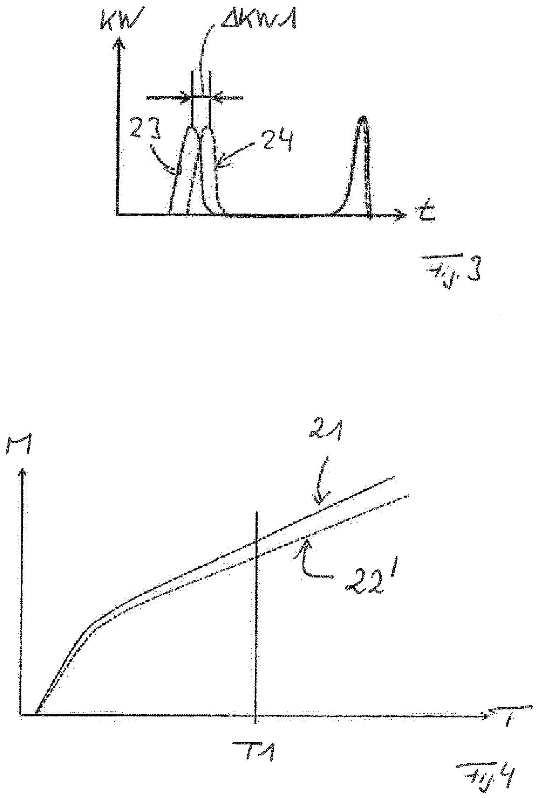

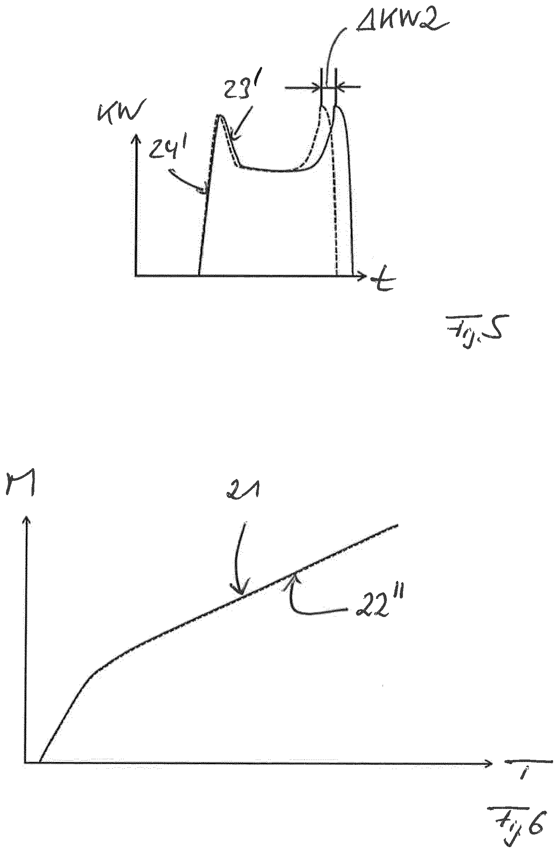

Fig. 3 visualisiert über der Zeit t Körperschallwellen KW Schallintensität statt "KW" verwenden und zwar einen Soll-Verlauf 23 und einen Ist-Verlauf 24 von Körperschallwellen, (Verlauf Fig. 3 sowie Fig. 5 ist ein verarbeiteter Körperschallsignalverlauf, Wording statt Körperschallwellen, Körpersignalverlauf bei Bezug auf Fig.) die dann theoretisch vorliegen sollen und tatsächlich ausbilden, wenn ein Haupt-Kraftstoffinjektor 6 mit der in Fig. 2 exemplarisch gewählten Ansteuerzeit T1 zum Öffnen und Schließen angesteuert wird, nämlich dann, wenn der Dual-Fuel-Motor 1 im Stand-by-Modus betrieben wird, also dann, wenn das Magnetventil des Haupt-Kraftstoffinjektors 6 ohne Kraftstoffeinspritzdruck an denselben zum Öffnen und Schließen angesteuert wird.

Erfindungsgemäß werden die tatsächlich emittierten Ist-Körperschallwellen 24 mit den Soll-Körperschallwellen 23 verglichen (Vergleich findet in Form von z.B. Kennfelder (Öffnen, Schließen etc.) für die charakteristischen quantifizierten Referenzwerte oder modellbasiert statt... 23 bzgl. ihrer Signalcharakteristik verglichen...), wobei hierbei gemäß Fig. 3 für den Fall des Stand-by-Modus des Dual-Fuel-Motors 1 beim Öffnen des jeweiligen Haupt-Kraftstoffinjektors 6 ein Versatz (Änderung des Körperschalls in der Zeichnung auf Zeit nachziehen ΔKW ggf. irreführend.) zwischen Maximum-Werten der Soll-Körperschallwellen 23 und der Ist-Körperschallwellen 24 während des Öffnens des jeweiligen Haupt-Kraftstoffinjektors 6 festgestellt wird. Im exemplarischen Beispiel der Fig. 3 werden im Stand-by-Modus zum Ende der Ansteuerung, also beim Schließen des Haupt-Kraftstoffinjektors 6, keine derartige Abweichung zwischen den Soll-Körperschallwellen 23 und der Ist-Körperschallwellen 24 festgestellt.

Es sei jedoch darauf hingewiesen, dass im Stand-by-Modus auch zum Ende der Ansteuerung, also beim Schließen des jeweiligen Haupt-Kraftstoffinjektors 6, oder auch nur zum Ende der Ansteuerung des jeweiligen Haupt-Kraftstoffinjektors 6 eine derartige Abweichung zwischen den Ist-Körperschallwellen 24 und den Soll-Körperschallwellen 23 festgestellt werden kann (Verlauf Fig. 3 sowie Fig. 5 ist ein verarbeiteter Körperschallsignalverlauf, Wording statt Körperschallwellen, Körpersignalverlauf bei Bezug auf Fig.), also eine entsprechende Abweichung zwischen den Maximum-Werten der Körperschallwellen 23, 24.

Es ist vorgesehen, dass dann, wenn im Stand-by-Betriebsmodus eine Abweichung zwischen den tatsächlich emittierten Ist-Körperschallwellen 24 und den Soll-Körperschallwellen 23 festgestellt wird, auf einen magnetventilabhängigen Drift oder Verschleiß des Haupt-Kraftstoffinjektors 6 zu schließen, wobei dann abhängig von diesem magnetventilabhängigen Drift oder Verschleiß ein Ansteuerbeginn und/oder ein Ansteuerende, in Fig. 3 ein Ansteuerbeginn, des jeweiligen Magnetventils des jeweiligen Haupt-Kraftstoffinjektors 6angepasst wird.

Fig. 4 zeigt über der Ansteuerzeit T wiederum die Einspritzmasse M (Groß T als Ansteuerzeit und klein t als Zeitachseneinheit erachte ich als Sinnvoll. Alternativ zu T (SOE-EOE) StartOfEnergizing-EndOfEnergizing), nämlich die Soll-Einspritzmasse 21 sowie eine Ist-Einspritzmasse 22', wobei sich die Ist-Einspritzmasse 22' dann ausbildet, wenn die Steuerung des Magnetventils des Haupt-Kraftstoffinjektors 6 abhängig von dem in Fig. 3 festgestellten magnetventilabhängigen Drift oder Verschleiß angepasst wird, nämlich abhängig vom Versatz Δt1 des Körpersignalverlauf 23, 24 zu Beginn der Ansteuerung des Magnetventils des jeweiligen Haupt-Kraftstoffinjektors 6. Dabei kann Fig. 4 entnommen werden, dass durch diese Anpassung der Ansteuerung des Magnetventils insbesondere bei kleinen Ansteuerzeiten T bereits die Ist-Einspritzmasse 22' stärker der Soll-Einspritzmasse 21 folgt als dies gemäß Fig. 2 bei nicht angepassten Ansteuerzeiten der Fall ist.

Es wird nicht nur dann, wenn die Brennkraftmaschine im Stand-by-Modus ohne Kraftstoffeinspritzdruck an den Haupt-Kraftstoffinjektoren 6 betrieben wird, eine Abweichung zwischen Ist-Körperschallwellen und Soll-Körperschallwellen erfasst, sondern auch dann, wenn die Brennkraftmaschine im Einspritzmodus betrieben wird und beim Ansteuern der Magnetventile der Haupt-Kraftstoffinjektoren 6 zum Öffnen und Schließen an denselben der Kraftstoffeinspritzdruck anliegt. Fig. 5 über der Zeit t wiederum Körperschallwellen - (Schallintensität) aufgetragen, nämlich ein Verlauf von Soll-Körperschallwellen 23' und von Ist-Körperschallwellen 24' (Verlauf Fig. 3 sowie Fig. 5 ist ein verarbeiteter Körperschallsignalverlauf, Wording statt Körperschallwellen, Körpersignalverlauf bei Bezug auf Fig.- Schallintensität verwenden), und zwar wiederum für die Ansteuerdauer T1 des Magnetventils des jeweiligen Kraftstoffinjektors 6 , wobei in Fig. 5 die Ansteuerdauer bereits abhängig vom im Stand-by-Modus festgestellten magnetventilabhängigen Drift oder Verschleiß des Haupt-Kraftstoffinjektors 6 angepasst wurde.

Im in Fig. 5 gezeigten Beispiel wird dann, wenn im Einspritz-Modus das Magnetventil des jeweiligen Haupt-Kraftstoffinjektors 6 mit Kraftstoffeinspritzdruck am Haupt-Kraftstoffinjektor 6 zum Öffnen und Schließen angesteuert wird, der Verlauf der Ist-Körperschallwellen 23' messtechnisch erfasst und mit dem Soll-Verlauf 24 verglichen, wobei in Fig. 5 beispielhaft zum Ende der Einspritzdauer, also beim Schließen des jeweiligen Haupt-Kraftstoffinjektors 6, eine Abweichung Δt2 zwischen dem Soll-Verlauf 24' und dem Ist-Verlauf 23' der Körperschallwellen KW erfasst wird. Dieser Versatz Δt2 lässt auf einen düsennadelabhängigen und/oder düsensitzabhängigen Drift oder Verschleiß am jeweiligen Kraftstoffinjektor 6 schließen, wobei abhängig von diesem düsennadelabhängigen und/oder düsensitzabhängigen Drift oder Verschleiß die Ansteuerdauer, und zwar in Fig. 5 das Ansteuerende, des Magnetventils des jeweiligen Haupt-Kraftstoffinjektors 6 wiederum angepasst wird, um diesen düsennadelabhängigen und/oder düsensitzabhängigen Drift oder Verschleiß, der durch den Versatz Δt2zwischen den Ist-Körperschallwellen 23 und den Soll-Körperschallwellen 24 widerspiegelt, zu kompensieren. Es sei darauf hingewiesen, dass im Einspritz-Modus auch zu Anfang der Ansteuerung, also beim Öffnen des jeweiligen Haupt-Kraftstoffinjektors 6, eine derartige Abweichung zwischen den Ist-Körperschallwellen 24 und den Soll-Körperschallwellen 23 festgestellt werden kann.

Dann, wenn die Ansteuerdauer T, also der Ansteuerbeginn und/oder das Ansteuerende des Magnetventils für den jeweiligen Haupt-Kraftstoffinjektor 6, abhängig von dem im Stand-by-Modus und Einspritz-Modus erfassten Drift oder Verschleiß, der sich durch die den Versatz Δt1 und den Versatz Δt2 der Fig. 3 und 5 zwischen dem jeweiligen Soll-Verlauf und dem jeweiligen Ist-Verlauf der Körperschallwellen widerspiegelt, kompensiert wird, bildet sich bei Ansteuerung des Magnetventils des jeweiligen Haupt-Kraftstoffinjektor 6 die in Fig. 6 durch den Kurvenverlauf 22" gezeigte Ist-Einspritzmasse aus, die der Soll-Einspritzmasse 21 folgt.

Hierdurch ist es dann möglich, trotz eines Drifts oder Verschleißes am Haupt-Kraftstoffinjektor 6, insbesondere am Magnetventil und/oder an der Düsennadel und/oder am Düsensitz, eine gewünschte Kraftstoffmenge exakt in den Zylinder 2 einzubringen. Hierdurch ist es insbesondere bei Dual-Fuel-Motoren 1 möglich, die Haupt-Kraftstoffinjektoren 6 so genau zu betreiben, dass dieselben auch im zweiten Betriebsmodus als Zündfluid-Injektoren genutzt werden können, sodass auf separate Zündfluid-Injektoren verzichtet werden kann.

Die obigen Details können nicht nur bei Dual-Fuel-Motoren zum Einsatz kommen, sondern auch bei Motoren, die ausschließlich Dieselkraftstoffe verbrennen. In diesem Fall kann dann der Wirkungsgrad gesteigert werden, Abgasemissionen können reduziert werden.

Ferner können die obigen Details genutzt werden, um die im Bereich der Gas-Kraftstoffinjektoren 14 eines Dual-Fuel-Motors eingebrachte Gasmasse mit höherer Genauigkeit in die Ladeluft 10 einzubringen. Im Bereich der Gas-Kraftstoffinjektoren 14 kann insbesondere ein Hängenbleiben der Gas-Kraftstoffinjektoren 14 überwacht werden. Ein solches Hängenbleiben der Gas-Kraftstoffinjektoren führt nach dem Stand der Technik zu einer unkontrollierten Zuführung von Gas, wodurch im Ladelufttrakt sowie auch im Abgastrakt der Brennkraftmaschine die Explosionsgefahr erhöht wird. Dies kann mit der Erfindung vermieden werden, da durch die Erfassung der Körperschallwellen und/oder Beschleunigungen an den Gas-Kraftstoffinjektoren 14 ein Hängenbleiben derselben erkannt werden kann und so entsprechende Gegenmaßnahmen eingeleitet werden können, um das unkontrollierte Zuführen von Gas zu stoppen. Insbesondere kann in diesem Fall ein Notstopp der Brennkraftmaschine ausgelöst werden. Ferner kann ein nicht gezeigtes, in der Gaszuführleitung 15 stromaufwärts der Gas-Kraftstoffinjektoren 14 zugeordnetes Ventil geschlossen werden, um die Gaszufuhr in Richtung auf die Gas-Kraftstoffinjektoren 14 zu unterbrechen.

Die Erfindung betrifft weiterhin eine Steuerungseinrichtung, namentlich eine elektronische Steuerungseinrichtung, zur Durchführung des erfindungsgemäßen Verfahrens, wobei es sich bei dieser Steuerungseinrichtung insbesondere um eine Motorsteuerungseinrichtung handelt. Diese Steuerungseinrichtung umfasst Mittel zur steuerungsseitigen Ausführung des Verfahrens, wobei es sich bei diesen Mitteln um softwareseitige Mittel und hardwareseitige Mittel handelt. Zu den hardwareseitigen Mitteln zählen Datenschnittstellen, um mit den an der Durchführung des erfindungsgemäßen Verfahrens beteiligten Baugruppen, insbesondere mit den eingesetzten Sensoren, Daten auszutauschen. Ferner zählen zu den hardwareseitigen Mitteln ein Prozessor zur Datenverarbeitung und ein Speicher zur Datenspeicherung. Zu den softwareseitigen Mitteln zählen Programmbausteine zur Durchführung des erfindungsgemäßen Verfahrens.

## Patentansprüche

1. Verfahren zum Betreiben einer Brennkraftmaschine mit mehreren Zylindern, wobei die Brennkraftmaschine für jeden Zylinder jeweils mindestens einen Kraftstoffinjektor aufweist, und wobei jeder Kraftstoffinjektor über ein Magnetventil des jeweiligen Kraftstoffinjektors zum Öffnen und Schließen angesteuert wird, **dadurch gekennzeichnet, dass**
von den Kraftstoffinjektoren emittierte Körperschallwellen und/oder von den Kraftstoffinjektoren verursachte Beschleunigungen messtechnisch erfasst werden,
die messtechnisch erfassten Körperschallwellen und/oder die messtechnisch erfassten Beschleunigungen ausgewertet werden, wobei auf Grundlage der Auswertung automatisch auf Eigenschaften der Kraftstoffinjektoren geschlossen wird.

2. Verfahren nach Anspruch 1, **dadurch gekennzeichnet, dass** die messtechnisch erfassten Körperschallwellen und/oder Beschleunigungen mit einem jeweiligen Referenzwert und/oder untereinander verglichen werden, wobei auf Grundlage dieses Vergleichs automatisch auf Eigenschaften der Kraftstoffinjektoren geschlossen wird.

3. Verfahren nach Anspruch 1 oder 2, **dadurch gekennzeichnet, dass** die Körperschallwellen und/oder Beschleunigungen mit Hilfe von Körperschallsensoren und/oder Beschleunigungssensoren erfasst werden, die auf mit den Kraftstoffinjektoren körperschallseitig gekoppelten Baugruppen angebracht sind, oder mit Hilfe von Körperschallsensoren erfasst werden, die unmittelbar auf den Kraftstoffinjektoren angebracht sind.

4. Verfahren nach einem der Ansprüche 1 bis 3, **dadurch gekennzeichnet, dass** auf Grundlage des Vergleichs automatisch auf eine Öffnungsdauer und/oder Öffnungsgeschwindigkeit und/oder Schließgeschwindigkeit und/oder einen Öffnungszeitpunkt und/oder einen Schließzeitpunkt und/oder einen Öffnungsgrad und/oder Schließgrad und/oder auf einen Verschleiß und/oder auf einen Drift der Kraftstoffinjektoren erkannt wird.

5. Verfahren nach einem der Ansprüche 1 bis 4, **dadurch gekennzeichnet, dass** auf Grundlage des Vergleichs automatisch auf ordnungsgemäß arbeitende Kraftstoffinjektoren und nicht-ordnungsgemäß arbeitende Kraftstoffinjektoren erkannt wird.

6. Verfahren nach einem der Ansprüche 1 bis 5, **dadurch gekennzeichnet, dass**
während des Stillstands der Brennkraftmaschine, im sogenannten Standby-Modus, die Magnetventile der Kraftstoffinjektoren ohne Kraftstoffeinspritzdruck an den Kraftstoffinjektoren zum Öffnen und Schließen angesteuert werden, von den Kraftstoffinjektoren emittierte Körperschallwellen und/oder von den Kraftstoffinjektoren verursachte Beschleunigungen messtechnisch erfasst werden und abhängig von einem Vergleich der Ist-Messgrößen mit Sollgrößen ein magnetventilabhängiger Drift oder Verschleiß der Kraftstoffinjektoren erkannt wird, und/oder
dann, wenn die Brennkraftmaschine im Einspritz-Modus betrieben und hierbei die Magnetventile der Kraftstoffinjektoren mit Kraftstoffeinspritzdruck an den Kraftstoffinjektoren zum Öffnen und Schließen angesteuert werden, von den Kraftstoffinjektoren emittierte Körperschallwellen und/oder von den Kraftstoffinjektoren verursachte Beschleunigungen messtechnisch erfasst werden und abhängig von einem Vergleich der Ist-Messgrößen mit Sollgrößen ein düsennadelabhängiger und/oder düsensitzabhängiger Drift oder Verschleiß der Kraftstoffinjektoren erkannt wird.

7. Verfahren nach Anspruch 6, **dadurch gekennzeichnet, dass**
abhängig von dem magnetventilabhängigen Drift oder Verschleiß ein Ansteuerbeginn und/oder ein Ansteuerende des jeweiligen Magnetventils des jeweiligen Kraftstoffinjektors angepasst wird, und/oder
abhängig von dem düsennadelabhängigen und/oder düsensitzabhängigen Drift oder Verschleiß ein Ansteuerbeginn und/oder ein Ansteuerende des jeweiligen Magnetventils des jeweiligen Kraftstoffinjektors angepasst wird.

8. Verfahren nach einem der Ansprüche 1 bis 7, **dadurch gekennzeichnet, dass** bei einem Dieselmotor von den Diesel-Kraftstoffinjektoren emittierte Körperschallwellen und/oder von den Diesel-Kraftstoffinjektoren verursachte Beschleunigungen erfasst werden.

9. Verfahren nach einem der Ansprüche 1 bis 7, **dadurch gekennzeichnet, dass** bei einem Dual-Fuel-Motor
in einem ersten Betriebsmodus von Diesel-Kraftstoffinjektoren emittierte Körperschallwellen und/oder Diesel-Kraftstoffinjektoren verursachte Beschleunigungen erfasst und ausgewertet werden,
in einem zweiten Betriebsmodus von Diesel-Kraftstoffinjektoren emittierte Körperschallwellen und/oder von den Diesel-Kraftstoffinjektoren verursachte Beschleunigungen und ferner von Gas-Kraftstoffinjektoren emittierte Körperschallwellen und/oder von den Gas -Kraftstoffinjektoren verursachte Beschleunigungen erfasst und ausgewertet werden.

10. Steuerungseinrichtung zum Betreiben einer Brennkraftmaschine, **dadurch gekennzeichnet, dass** die Steuerungseinrichtung das Verfahren nach einem der Ansprüche 1 bis 9 steuerungsseitig ausführt.
